# EUROPÄISCHE PATENTSCHRIFT

(11) **EP 2 001 632 B1**
(45) Veröffentlichungstag und Bekanntmachung des Hinweises auf die Patenterteilung: **02.11.2011**
(21) Anmeldenummer: 07723691.7
(22) Anmeldetag: 28.03.2007
(51) Int. Cl.: B23P 19/00, B25B 5/14, B21D 39/02, B23K 37/04, B21J 15/42, B23Q 1/52

(54) **Kombination einer SPANNVORRICHTUNG ZUM AUFNEHMEN UND SPANNEN VON BAUTEILEN und eines Roboterarms**
Combination of a CLAMPING DEVICE FOR HOLDING AND CLAMPING COMPONENTS and a robot arm
Combinaison d'un DISPOSITIF DE SERRAGE POUR supporter ET SERRER DES pièces et d'un bras de robot

(30) Priorität: 28.03.2006 DE 102006014279
(43) Veröffentlichungstag der Anmeldung: 17.12.2008
(73) Patentinhaber: EDAG GmbH & Co. KGaA, 36039 Fulda (DE)
(72) Erfinder: REITH, Stefan, 36145 Hofbieber (DE); KÖRBEL, Christian, 36093 Künzell (DE)
(74) Vertreter: Schwabe - Sandmair - Marx
(86) Internationale Anmeldenummer: PCT/EP2007/002745
(87) Internationale Veröffentlichungsnummer: WO 2007/110235

(56) Entgegenhaltungen:
- FR-A1- 2 843 708
- JP-A- 6 047 557
- JP-A- 7 068 324
- US-A- 5 479 698

## Beschreibung

Die Erfindung betrifft eine Kombination einer Spannvorrichtung für miteinander zu fügende Bauteile und einen die Spannvorrichtung tragenden Roboterarms, und ferner ein Fügeverfahren. Die Erfindung ist insbesondere für das Rollfalzen von Blechstrukturen einsetzbar, bevorzugt im Fahrzeugbau. Ein besonders bevorzugtes Einsatzgebiet ist die Serienfertigung von Karosserien oder Karosserieteilen, insbesondere Anbauteilen, von Automobilen.

Zum Fügen von Bauteilen werden die Bauteile mittels Spannvorrichtungen relativ zueinander in einer Fügeposition gespannt. In der Fügeposition nehmen die Bauteile relativ zueinander jeweils die Position ein, die sie in dem zu schaffenden Fügeverbund einnehmen sollen. In dem Fügeprozess werden die gespannten Bauteile dauerhaft fest miteinander verbunden. Die Spannvorrichtung beeinträchtigt im Allgemeinen die Zugänglichkeit zu den miteinander zu fügenden Bauteilen und bildet für die den Fügeprozess durchführende Fügeeinrichtung eine Störkontur. Beim Falzen, dem bevorzugten Einsatzgebiet der Erfindung, bereitet diesbezüglich insbesondere das Falzen längs eines in sich zurücklaufenden Pfads längs eines äußeren Umfangsrands der miteinander zu verbindenden Bauteile Probleme.

Aus der JP 07068324 A ist eine gattungsgemäße Kombination einer Spannvorrichtung und eines die Spannvorrichtung tragenden Roboterarms bekannt.

Es ist eine Aufgabe der Erfindung, eine Spannvorrichtung so zu gestalten, dass herkömmliche Roboter auf möglichst einfache Weise auf die Handhabung der Spannvorrichtung eingerichtet werden können.

Diese Aufgabe wird gelöst mit einer Kombination einer Spannvorrichtung und eines Roboters gemäß den Merkmalen des Patentanspruchs 1 sowie mit einem Verfahren gemäß den Merkmalen des Patentanspruchs 23.

Eine Spannvorrichtung, wie die Erfindung sie in Kombination mit einem Roboterarm betrifft, umfasst eine erste Bauteil-Aufnahme für ein erstes Bauteil, eine zweite Bauteil-Aufnahme für ein zweites Bauteil und eine Spannstruktur, welche die Bauteil-Aufnahmen relativ zueinander in einer Fügeposition spannt und dadurch fixiert. In der Fügeposition der Bauteil-Aufnahmen nehmen die von den Bauteil-Aufnahmen aufgenommenen Bauteile relativ zueinander ebenfalls die Fügeposition ein, die sie nach Durchführung des Fügeprozesses im dauerhaft fest gefügten Fügeverbund einnehmen. Eine oder beide Bauteil-Aufnahmen kann oder können das jeweilige Bauteil greifen, beispielsweise mit einem oder mehreren Klemmgreifem oder Sauggreifern oder gegebenenfalls auch einer Kombination unterschiedlicher Greifer. Vorzugsweise greift nur eine der Bauteil-Aufnahmen das betreffende Bauteil. Die andere Bauteil-Aufnahme nimmt ihr Bauteil vorzugsweise lediglich lose auf, indem das betreffende Bauteil auf Auflagen der Bauteil-Aufnahme nur aufliegt, jedoch nicht geklemmt wird. Die Bauteil-Aufnahmen weisen je eine das Bauteil kontaktierende Innenseite und eine von der Innenseite gegenüberliegend abgewandte Außenseite auf. Die Bauteil-Aufnahmen sind vorzugsweise flächenhafte Strukturen. Die jeweilige Dicke, die in Richtung einer Draufsicht auf die jeweilige Außenseite gemessen wird, ist jeweils deutlich kleiner als die in der Ebene der Draufsicht gemessene Länge und Breite. Das Gleiche gilt vorzugsweise für die Bauteile. Die Bauteil-Aufnahmen weisen vorzugsweise je einen Träger mit einem oder mehreren an dem jeweiligen Träger angeordneten, der Aufnahme des jeweiligen Bauteils dienenden Funktionsteilen auf. Die Funktionsteile können insbesondere die bereits genannten Greifer oder Auflagen oder der Positionierung der Bauteile dienende Positionierelemente sein. Vorteilhafterweise bildet eine der Bauteil-Aufnahmen ein Aufnahmebett, das die zum Fügen als solches erforderlichen Kräfte aufnehmen kann. Ein bevorzugtes Beispiel ist ein Falzbett, das den zu falzenden Bauteilrand abstützt. Der Träger kann schalenförmig oder insbesondere plattenförmig oder alternativ beispielsweise auch netzförmig oder fachwerkartig sein und ist im vorstehenden Sinne vorzugsweise eine flächenhafte Struktur. In der Fügeposition liegen sich die Innenseiten der Bauteil-Aufnahmen zugewandt gegenüber und der Umfangsrand läuft um die Innenseiten vollständig um. Die Außenseiten weisen voneinander weg.

Die Spannstruktur umgreift die Bauteil-Aufnahmen, wenn diese relativ zueinander die Fügeposition einnehmen. Die Spannstruktur erstreckt sich von der Außenseite der ersten Bauteil-Aufnahme bis zu der Außenseite der zweiten Bauteil-Aufnahme und umgreift somit einen Umfangsrand der beiden Bauteil-Aufnahmen. Die Spannstruktur ist aus jeweils einem Innenbereich der Bauteil-Aufnahmen, der von dem Umfangsrand umschlossen und in dem die Spannkraft in die jeweilige Bauteil-Aufnahme eingeleitet wird, nach außen geführt.

Die Spannstruktur kann insbesondere die Form eines Bügels aufweisen oder wenigstens einen Bügel bilden, wobei der Bügel oder die mehreren Bügel den Umfangsrand der Bauteil-Aufnahmen umgreift oder jeweils umgreifen. Sie kann insbesondere die Form eines Doppelbügels aufweisen, d. h. eines Rahmens, der die Bauteil-Aufnahmen an zwei Seiten des Umfangsrands umgreift. Der oder die Bügel oder der Rahmen ist oder sind vorzugsweise zumindest im Wesentlichen zweidimensionale Gebilde, so dass im Falle eines Mehrfachbügels, beispielsweise des bevorzugten Rahmens, die mehreren Bügel oder der Rahmen die Bauteil-Aufnahmen an voneinander gegenüberliegend abgewandten Seiten den Umfangsrand umgreifen. Ein Rahmen wird hinsichtlich der erhöhten mechanischen Stabilität im Vergleich zu einem einfachen Bügel der Vorzug gegeben. Andererseits bildet ein einfacher Bügel weniger Störkonturen.

Da die Spannstruktur den Umfangsrand der Bauteil-Aufnahmen vorzugsweise in einem Abstand umgreift, ist der Umfangsrand zumindest grundsätzlich überall zugänglich. Um die Zugänglichkeit noch zu verbessern, sind die in der Fügeposition relativ zueinander fixierten Bauteil-Aufnahmen und die Spannstruktur relativ zueinander bewegbar, wobei die Bewegbarkeit derart ist, dass durch die Relativbewegung die Position zumindest eines den Umfangsrand umgreifenden Spannstrukturbereichs oder vorzugsweise die Position der Spannstruktur insgesamt in Längsrichtung des Umfangsrands verändert werden kann. Die Spannstruktur ist in bevorzugten Ausführungen mit den Bauteil-Aufnahmen auf eine Weise beweglich verbunden, dass bei dem Fügeprozess ein Fügewerkzeug aus einer Startposition in einem Umlauf, der sich um eine Achse im Raum über 360° erstreckt, vorzugsweise in einem in sich geschlossenen Umlauf, um den Bereich der Bauteil-Aufnahmen bewegt werden kann, in dem die Spannstruktur für die Einleitung der Spannkraft abgestützt ist. Die Spannstruktur kann während des Umlaufs zumindest ein Stück weit in die gleiche Richtung vor- oder nachlaufen, so dass das Fügewerkzeug von der Spannstruktur unbehindert bis in die Startposition zurückbewegt werden kann. Eine den Umfangsrand umgreifende Spannstruktur ist allerdings auch dann vorteilhaft, wenn der Pfad, längs dem die Bauteile verbunden werden, nicht geschlossen ist. Auch in solchen Fällen ist die relative Bewegbarkeit vorteilhaft, um Behinderungen des Fügewerkzeugs zu vermeiden.

Für die Erzeugung der Relativbewegung zwischen der Spannstruktur und den Bauteil-Aufnahmen kann beispielsweise entweder die Spannstruktur oder die von den Bauteil-Aufnahmen gebildete Bauteil-Aufnahmeeinrichtung in einer Fügestation ortsfest, d. h. unbeweglich angeordnet und das jeweils andere bewegbar sein. Alternativ kann die Relativbewegung auch durch eine koordinierte Bewegung sowohl der Spannstruktur als auch der Bauteil-Aufnahmen erzeugt werden. In bevorzugten Ausführungen sind die Bauteil-Aufnahmen für die Durchführung des Fügeprozesses in der Fügestation bewegbar angeordnet. In derartigen Ausführungen werden die in der Fügeposition relativ zueinander gespannten Bauteile während des Fügeprozesses im Raum relativ zu einem Fügewerkzeug bewegt. Im bevorzugten Extremfall ist das Fügewerkzeug in der Fügestation ortsfest angeordnet, und es wird nur die Spannvorrichtung oder es werden nur die Bauteil-Aufnahmen relativ zu dem Fügewerkzeug entsprechend der Kontur des Umfangsrands bewegt. In diesem Sinne ist die Erfindung insbesondere auf ein "fliegendes Fügen" gerichtet. Soweit Bewegungen des Fügewerkzeugs, der Bauteil-Aufnahmen und der Spannstruktur nicht konkret bezüglich des Raums beschrieben werden, handelt es sich um Bewegungen dieser Komponenten relativ zueinander, und es bleibt offen, welche der Komponenten eine Absolutbewegung ausführt oder ausführen.

Die Spannvorrichtung wird vorzugsweise in Verbindung mit einer Fügeeinrichtung verwendet, mittels der die Bauteile längs des gemeinsamen Umfangsrands miteinander verbunden werden. Die Fügeeinrichtung ist vorzugsweise eine Falzeinrichtung, besonders bevorzugt eine Rollfalzeinrichtung, kann alternativ aber beispielsweise auch eine Schweißeinrichtung, Löteinrichtung oder Klebeeinrichtung sein.

Die Spannvorrichtung ist an einem im Raum beweglichen Aktor befestigt. Der Aktor ist vorzugsweise in allen drei Freiheitsgraden der Translation und allen drei Freiheitsgraden der Rotation frei im Raum beweglich. Den Aktor bildet ein Roboterarm. Die Spannvorrichtung kann insbesondere an einem Ende des Roboterarms befestigt sein. Der Aktor sorgt für die Relativbewegbarkeit zwischen der Spannstruktur und den in der Fügeposition befindlichen Bauteil-Aufnahmen. In diesem Fall sind eine der Bauteil-Aufnahmen mit einer der Bewegungsachsen des Aktors und die Spannstruktur mit einer anderen der Bewegungsachsen des Aktors jeweils unbeweglich verbunden. Es handelt sich bei dem Aktor um einen Roboterarm mit mehreren steifen Gelenkelementen, die von einer Basis des Roboters aus bis zu dem Ende des Roboterarms hintereinander angeordnet sind. Die Spannstruktur oder vorzugsweise die betreffende Bauteil-Aufnahme kann fest mit dem in der kinematischen Kette letzten, d. h. von der Roboterbasis am weitesten entfernten Gelenkelement befestigt sein, während die andere der beiden Komponenten fest mit einem anderen, vorzugsweise dem vorletzten Gelenkelement des Aktors verbunden sein kann. Das letzte und das vorletzte Gelenkelement bilden miteinander das von der Roboterbasis am weitesten entfernte Gelenk der kinematischen Kette.

Die Spannstruktur ist sozusagen am Aktor gefesselt, nämlich in Bezug auf den Bewegungsfreiheitsgrad des Gelenkelements, an dem die Bauteil-Aufnahmen befestigt sind. Dessen Freiheitsgrad besitzt die Spannstruktur nicht.

Wenn die Position eines den Umfangsrand der Bauteil-Aufnahmen umgreifenden Bereichs der Spannstruktur relativ zu dem Umfangsrand verändert werden kann, genügt es, wenn nicht die gesamte Spannstruktur, sondern nur der betreffende Bereich relativ zu dem Umfangsrand beweglich ist. Der betreffende Bereich kann beispielsweise an einem Spannstrukturausleger, der in Richtung Umfangsrand von einem zentralen Bereich der Spannstruktur abragt, beweglich befestigt sein, beispielsweise linearbeweglich oder vorzugsweise schwenkbeweglich. Bevorzugter ist nicht nur ein äußerer Bereich der Spannstruktur relativ zu den Bauteil-Aufnahmen beweglich, sondern die Spannstruktur insgesamt. Auch für die relative Beweglichkeit der Spannstruktur im Ganzen gilt, dass eine Schwenkbeweglichkeit oder Drehbeweglichkeit bevorzugt wird. Alternativ kann aber auch die Spannstruktur im Ganzen relativ zu den Bauteil-Aufnahmen linearbeweglich und hierfür beispielsweise als linearbeweglicher Schlitten gebildet sein. Wenn vorstehend von der Bewegbarkeit der Spannstruktur oder nur eines äußeren Spannstrukturbereichs die Rede ist, so umfasst dies wegen der relativen Beweglichkeit auch den Fall, dass die Spannstruktur bei dem Fügeprozess ortsfest und stattdessen die Bauteil-Aufnahmen für die Positionsänderung beweglich sind. Dies ist auch eine bevorzugte Art der relativen Beweglichkeit der Spannstruktur.

In einer bevorzugten Ausführung wird die Spannkraft in die Bauteil-Aufnahmen je nur an einer Stelle eingeleitet, vorzugsweise über je eine kurze Säule, d. h. einen Sockel. Eine Längsachse der Säule kann mit Vorteil auch eine Dreh- oder Schwenkachse der Spannstruktur bilden. Bei großflächigen Bauteilen kann es vorteilhaft sein, wenn die Spannkraft an mehreren Stellen in die Bauteil-Aufnahmen eingeleitet wird, vorzugsweise ebenfalls je mittels einer kurzen Säule. Auch in derartigen Ausführungen kann die Spannstruktur eine zusammenhängende Struktur mit einem oder mehreren relativ zu den Bauteil-Aufnahmen beweglichen Bereichen sein. Alternativ können mehrere Spannstrukturen der zuvor beschriebenen Art vorgesehen sein, um die Bauteil-Aufnahmen relativ zueinander zu spannen. Falls die mehreren Spannstrukturen wie bevorzugt jeweils relativ zu den Bauteil-Aufnahmen beweglich sind, um einen Werkzeugumlauf trotz ihrer den Umfangsrand umgreifenden Bereiche zu ermöglichen, können die Spannstrukturen oder jeweils nur bewegliche Bereich der Spannstrukturen mit eigenen Antrieben ausgestattet sein, oder die Relativbewegungen werden mittels eines Getriebes bewirkt. Bei Verwendung mehrerer nicht einheitlich beweglicher Spannstrukturen oder Spannstrukturbereichen kommen auch mehrere Fügewerkzeuge zum Einsatz und führen je nur einen Teilumlauf aus.

Die Spannstruktur ist in bevorzugten Ausführungen mehrteilig mit einem ersten Strukturteil und wenigstens einem weiteren, zweiten Strukturteil. Das erste Strukturteil und das zweite Strukturteil können permanent, relativ zueinander beweglich miteinander verbunden sein. In derartigen Ausführungen werden in einem ausgefahrenen Zustand die Bauteile aufgenommen und die Strukturteile mit den Bauteil-Aufnahmen und den aufgenommenen Bauteilen in die Fügeposition aufeinander zu bewegt und aneinander fixiert. Bevorzugter sind das erste Strukturteil und das zweite Strukturteil mittels einer Kupplung für das Spannen der Bauteile zwar fest miteinander verbunden, die Verbindung ist jedoch lösbar, so dass das erste Strukturteil mit der zugeordneten ersten Bauteil-Aufnahme und das zweite Strukturteil mit der zugeordneten zweiten Bauteil-Aufnahme je separat und unabhängig voneinander gehandhabt werden können, insbesondere für das Aufnehmen der Bauteile. Die Spannstruktur kann ein oder mehrere weitere Strukturteile umfassen, das oder die mit einem der beiden genannten Strukturteile permanent beweglich und fixierbar oder aber über je wieder eine Kupplung der genannten Art verbunden ist oder sind. Bevorzugt besteht die Spannstruktur jedoch nur aus dem ersten und dem zweiten Strukturteil, d. h. sie ist bevorzugt zweiteilig.

Die Kupplung zur Verbindung der Strukturteile umfasst eine mit dem ersten Strukturteil verbundene erste Kupplungshälfte und eine mit dem zweiten Strukturteil verbundene zweite Kupplungshälfte. Die Kupplungshälften sind vorteilhafterweise so gestaltet, dass sie durch eine Linearbewegung in einen Kupplungseingriff gebracht werden können. Die Richtung der Linearbewegung stimmt vorzugsweise mit der Richtung der Spannkraft überein, mit der die Bauteile in der Fügeposition mittels der Spannstruktur aufeinander zu, vorzugsweise unmittelbar gegeneinander, gepresst werden. Die Kupplungshälften sind vorzugsweise so geformt, dass sie sich bei der Herstellung des Kupplungseingriffs aneinander fest ziehen, sozusagen fest krallen, und dadurch die Spannkraft erzeugen. Von den Kupplungshälften bildet vorzugsweise die eine einen Kupplungsfinger und die andere eine Kupplungsaufnahme, die miteinander den Kupplungseingriff eingehen. So kann die Kupplung im verbundenen Zustand der Kupplungshälften vorzugsweise eine SteckerBuchsenverbindung bilden. Vorzugsweise weist die Kupplungshälfte mit der Kupplungsaufnahme wenigstens ein Eingriffselement auf und lagert dieses Eingriffselement quer zu der Richtung, in welche die Kupplungshälften in den Kupplungseingriff bewegt werden, d. h. quer zu der Spannrichtung, vorzugsweise senkrecht zu der Spannrichtung oder aber mit einer Neigung. Das wenigstens eine Eingriffselement ist im Kupplungseingriff vorteilhafterweise blockierbar. Die betreffende Kupplungshälfte weist in derartigen Ausführungen wenigstens ein Blockierelement auf und lagert dieses Blockierelement zwischen einer Blockierposition und einer Freigabeposition hin und her beweglich. In der Blockierposition verhindert das Blockierelement, dass das wenigstens eine Eingriffselement sich aus dem Kupplungseingriff bewegen kann. Der Kupplungseingriff ist nur in der Freigabeposition des Blockierelements möglich. Die Blockierung und das Lösen werden vorteilhafterweise von einer Steuerung, zweckmäßigerweise einer Aktorsteuerung, bewirkt, beispielsweise rein mechanisch oder vorzugsweise elektrisch oder pneumatisch.

Ein Spannvorrichtungsteil umfasst entweder die erste Bauteil-Aufnahme mit dem ersten Strukturteil oder die zweite Bauteil-Aufnahme mit dem zweiten Strukturteil. Die vorstehenden Ausführungen zu Ausgestaltungen der Spannvorrichtung im Ganzen gelten auch in Bezug auf das Spannvorrichtungsteil. Das Spannvorrichtungsteil umfasst auch das Strukturteil der Spannstruktur, das mit der betreffenden Bauteil-Aufnahme verbunden ist.

Im Falle der Ausbildung der Spannvorrichtungsteile mit Kupplungshälften, die in dem Sinne komplett sind, dass sie durch bloße Kontaktierung in den Kupplungseingriff gelangen, der zur Sicherung und auch zur Erleichterung des Lösens des Kupplungseingriffs blockierbar sein sollte, ist die Spannvorrichtung bestens geeignet für den Einsatz in Serienfertigungen mit kurzen Taktzeiten. Die Kupplungshälften sind hierfür vorteilhafterweise so geformt und am betreffenden Spannvorrichtungsteil angeordnet, dass der Kupplungseingriff durch eine einfache Bewegung des einen Spannvorrichtungsteils relativ zu dem anderen hergestellt werden kann, vorzugsweise mittels einer kurzhubigen Linearbewegung. In den bevorzugten Ausführungen genügt allein die Herstellung des Kupplungseingriffs, um die Bauteil-Aufnahmen und dadurch die aufgenommenen Bauteile relativ zueinander in der Fügeposition zu spannen. Falls beispielsweise die erste Bauteil-Aufnahme an einem im Raum frei bewegbaren Aktor, dem Roboterarm, befestigt ist, kann mit der ersten Bauteil-Aufnahme ein erstes Bauteil aufgenommen werden, indem die erste Bauteil-Aufnahme relativ zu dem betreffenden ersten Bauteil positioniert und das erste Bauteil aufgenommen und gehalten wird, um mit der ersten Bauteil-Aufnahme die zweite Bauteil-Aufnahme und damit gemeinsam auch das zweite Bauteil aufzunehmen, nämlich einfach durch Herstellung des Kupplungseingriffs. Von besonderem Vorteil ist ferner, dass die zweite Bauteil-Aufnahme nicht nur als Ablage für jeweils ein zweites Bauteil, sondern in weiterer Funktion nach Durchführung des Fügeprozesses auch als Entnahmeeinrichtung verwendet werden kann, indem die erste Bauteil-Aufnahme nach dem Fügen das erste Bauteil und damit den aus den Bauteilen erhaltenen Fügeverbund freigibt. Der freigegebene Fügeverbund kann anschließend aus der zweiten Bauteil-Aufnahme genommen werden. Die erste Bauteil-Aufnahme ist bereits wieder frei und kann beispielsweise das nächste erste Bauteil aufnehmen.

In einer ersten Ausführung ist das zweite Spannvorrichtungsteil mobil, so dass es nach dem Aufnehmen mit dem ersten Spannvorrichtungsteil gemeinsam die Spannvorrichtung bildend im Raum zu dem Fügewerkzeug und zum Verbinden der Bauteile relativ zu dem Fügewerkzeug ebenfalls im Raum entsprechend der Geometrie der herzustellenden Verbindung bewegbar ist. In einer zweiten Ausführung ist das zweite Spannvorrichtungsteil bei dem Verbinden der Bauteile ortsfest, während das Fügewerkzeug relativ zu der Spannvorrichtung im Raum bewegt wird.

Vorteilhafte Merkmale werden auch in den Unteransprüchen und deren Kombinationen beschrieben. Die Merkmale der Ansprüche und die vorstehend beschriebenen Merkmale ergänzen einander wechselseitig.

Nachfolgend werden Ausführungsbeispiele der Erfindung anhand von Figuren erläutert. An den Ausführungsbeispielen offenbar werdende Merkmale bilden je einzeln und in jeder Merkmalskombination die Gegenstände der Ansprüche und auch die vorstehend beschriebenen Ausgestaltungen vorteilhaft weiter. Es zeigen:
- Figur 1: eine Spannvorrichtung in einer perspektivischen Sicht,
- Figur 2: die Spannvorrichtung in einer anderen perspektivischen Sicht,
- Figur 3: einen Falzprozess,
- Figur 4: eine erste Hälfte der Spannvorrichtung,
- Figur 5: eine zweite Hälfte der Spannvorrichtung,
- Figur 6: Kupplungshälften der Spannvorrichtung,
- Figur 7: die zweite Hälfte der Spannvorrichtung mit einem aufgenommenen Bauteil und
- Figur 8: eine Fügestation für ein Fügeverfahren.

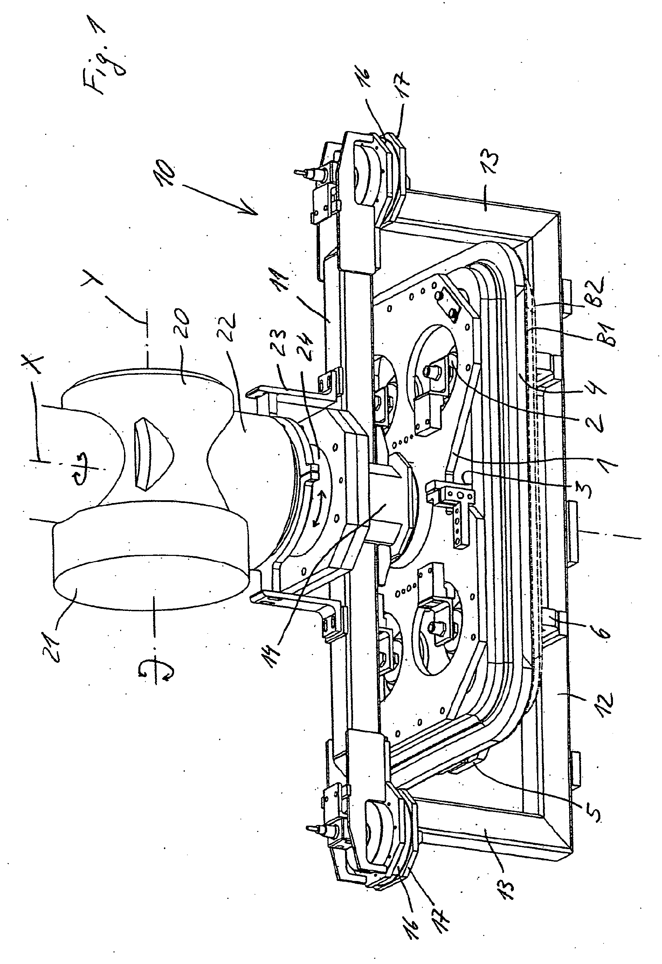

Figur 1 zeigt eine Spannvorrichtung, wie sie vorzugsweise für ein fliegendes Fügen, insbesondere Rollfalzen verwendet werden kann, in einem ersten Ausführungsbeispiel. Die Spannvorrichtung dient dem Spannen zweier Bauteile B1 und B2, die längs ihres äußeren Umfangsrands umlaufend in einem Fügeprozess fest miteinander verbunden werden, um nach dem Fügen einen Fügeverbund zu bilden. Die Spannvorrichtung spannt die Bauteile B1 und B2 relativ zueinander in einer Fügeposition, die sie nach dem Fügen auch im Fügeverbund einnehmen. Die Bauteile B1 und B2 werden im gespannten Zustand längs ihres äußeren Umfangsrands umlaufend gefügt, vorzugsweise durch Rollfalzen. Für die Herstellung der Verbindung kann ein einziges Fügewerkzeug einen kompletten Umlauf ausführen. Alternativ können über den äußeren Umfangsrand verteilt auch mehrere Werkzeuge vorgesehen sein und entsprechend je nur einen Teilabschnitt des Umfangsrands fügen. Bei dem bevorzugten Fügeprozess des Rollfalzens können mehrere Werkzeugköpfe mit der Neigung nach unterschiedlich angestellten Falzrollen oder ein einziger Werkzeugkopf mit gleichzeitig arbeitenden, unterschiedlich angestellten Falzrollen eingesetzt werden. Ein bevorzugtes Beispiel eines derartigen Falzkopfes wird in der europäischen Patentanmeldung EP 06 001 600 beschrieben. Wie bereits zu Fügewerkzeugen allgemein erwähnt, können mehrere derartige Rollfalzköpfe über den Umfangsrand der Bauteile B1 und B2 verteilt gleichzeitig je nur einen Teilumlauf ausführen. Bei dem fliegenden Fügen ist das Fügewerkzeug oder sind die mehreren Fügewerkzeuge in einer Fügestation ortsfest angeordnet, und der Umlauf wird durch eine entsprechende Bewegung der relativ zueinander in Fügeposition befindlichen Bauteile B1 und B2 bewirkt. Ein Rollfalzprozess als bevorzugtes Beispiel eines solchen Fügeprozesses ist Gegenstand der DE 103 38 170 B4, die diesbezüglich in Bezug genommen wird.

Die Spannvorrichtung umfasst eine erste Bauteil-Aufnahme 1 für das Bauteil B1 und eine zweite Bauteil-Aufnahme 5 für das Bauteil B2. Die Bauteile B1 und B2 sind Blechstrukturen. Das Bauteil B1 ist ein Außenblech und das Bauteil B2 ist ein Innenblech für ein Kraftfahrzeug-Anbauteil, beispielsweise eine Tür. Entsprechend sind auch die Bauteil-Aufnahmen 1 und 5 flächenhafte Strukturen mit einer Länge und einer Breite, die je mehrfach größer als die Dicke der betreffenden Struktur sind. Die Bauteil-Aufnahme 1 umfasst einen Träger, der im Ausführungsbeispiel als Tragplatte geformt und in den Figuren unmittelbar mit den Bezugszeichen "1" versehen ist, und ein fest mit dem Träger verbundenes Aufnahmebett 4, das im bevorzugten Verwendungsfall des Rollfalzens ein Falzbett ist. Das Aufnahmebett 4 bildet eine Innenseite der Bauteil-Aufnahme 1, an der das Bauteil B1 zumindest in einem Randstreifen, der den Umfangsrand bildet, anliegt. Die Bauteil-Aufnahme 1 umfasst ferner mehrere Greifer 2, mittels denen das Bauteil B1 hängend getragen werden kann. Die Greifer 2 ragen von einer Außenseite der Bauteil-Aufnahme 1 durch Öffnungen des Trägers und des Aufnahmebetts 4 und sind so angeordnet, dass sie das Bauteil B1 an dem Aufnahmebett 4 anliegend hängend tragen können. Die Greifer 2 sind Sauggreifer, im Ausführungsbeispiel pneumatische Sauggreifer, die wahlweise mit Unterdruck oder Überdruck beaufschlagbar sind. Des Weiteren umfasst die Bauteil-Aufnahme 1 ein Positionierelement 3, das im Ausführungsbeispiel als Zentrierstift gebildet ist. Das Positionierelement 3 ragt von der Außenseite der Bauteil-Aufnahme 1 durch einen Ausschnitt des Aufnahmebetts 4 und ragt über die Innenseite der Bauteil-Aufnahme 1 in Richtung auf die zweite Bauteil-Aufnahme 5 vor.

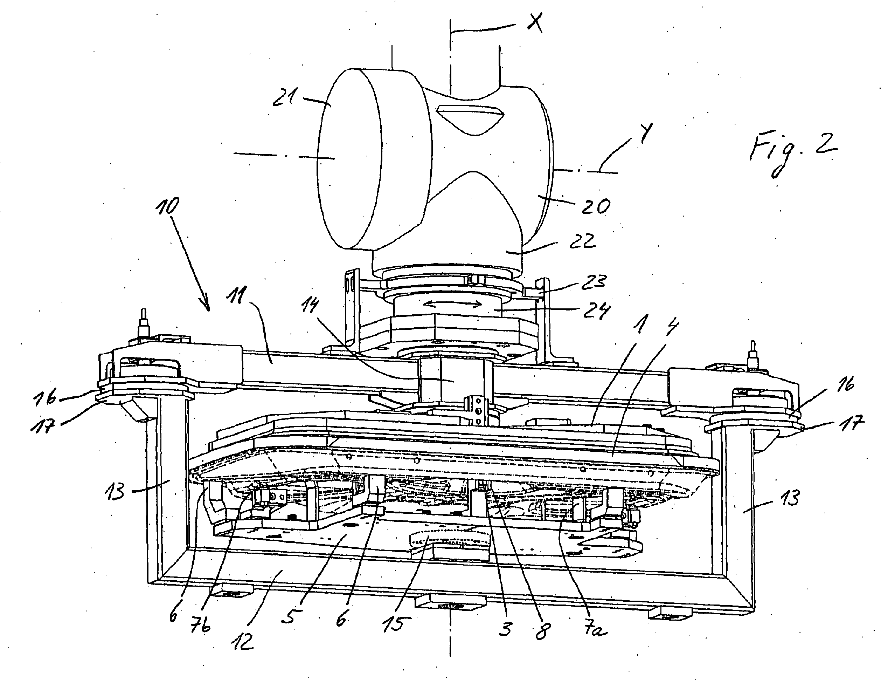

Figur 2 zeigt die Spannvorrichtung in einer Sicht auf die zweite Bauteil-Aufnahme 5. Die Bauteil-Aufnahme 5 weist ebenfalls einen Träger auf, der beispielhaft als Tragplatte geformt und in den Figuren unmittelbar mit dem Bezugszeichen "5" versehen ist. An dem Träger sind mehrere Auflagen 6 und Positionierelemente 7a, 7b und 8 angeordnet. Das aufgenommene Bauteil B2 liegt auf den Auflagen 6. Die Auflagen 6 bilden ein Aufnahmebett 6 für das Bauteil B2. Die Auflagen 6 können in Zweitfunktion auch der Positionierung des Bauteils B2 relativ zu der Bauteil-Aufnahme 5 dienen. Die Positionierelemente 7a dienen als Einweiser beim Auflegen des Bauteils B2, und die stiftförmigen weiteren Positionierelemente 7b dienen der genaueren Positionierung des Bauteils B2 relativ zu der Bauteil-Aufnahme 5. Das Positionierelement 8 dient im Zusammenwirken mit dem Positionierelement 3 der ersten Bauteil-Aufnahme 1 der Positionierung der Bauteil-Aufnahmen 1 und 5 relativ zueinander und ist im Ausführungsbeispiel daher als Stiftaufnahme gebildet, in die das Positionierelement 3 einfährt, wenn die Bauteil-Aufnahmen 1 und 5 aufeinander zu in die dargestellte Fügeposition bewegt und die von den Bauteil-Aufnahmen 1 und 5 gebildete Bauteil-Aufnahmeeinrichtung 1, 5 geschlossen wird.

Die Spannvorrichtung umfasst ferner eine Spannstruktur 10 mit einem ersten Strukturteil 11, das mit der Bauteil-Aufnahme 1 permanent verbunden ist, und einem zweiten Strukturteil 12, 13, das mit der Bauteil-Aufnahme 5 permanent verbunden ist. Die Strukturteile 11 und 12, 13 sind mittels einer lösbaren Verbindung fest miteinander verbunden. Im dargestellten, verbundenen Zustand nimmt die Spannstruktur 10 die Spannkraft auf, mit der die Bauteile B1 und B2 in eine Spannrichtung X gegeneinander gepresst und so in der Fügeposition gespannt werden. Die Spannstruktur 10 weist im Ganzen die Form eines Rahmens oder Doppelbügels auf, der die Bauteil-Aufnahmen 1 und 5 und die darin aufgenommenen Bauteile B1 und B2 an zwei einander gegenüberliegenden Seiten des Umfangsrands in einem Abstand umgreift.

Die Spannstruktur 10 umfasst ein zentrales Gelenkelement 14, von dem zwei balkenförmige, gerade Ausleger, die zusammen das Strukturteil 11 bilden, nach außen abragen. Das Strukturteil 11 und das Gelenkelement 14 bilden ein einziges steifes Teil. Das Gelenkelement 14 bildet mit einem Gelenkelement 24 ein Drehgelenk mit einer in die Spannrichtung X weisenden Gelenkachse X. Das Gelenkelement 24 ragt zentral in X-Richtung von der Außenseite der Bauteil-Aufnahme 1 ab und ist mit dieser steif verbunden. Die Bauteil-Aufnahme 1 ist über das Gelenkelement 24 und ein Andockglied 20 mit einem im Raum beweglichen Aktor, vorzugsweise dem Ende eines Roboterarms, verbunden. Das Gelenkelement 24 bildet mit dem Andockglied 20 ein Anschlussgelenk 20, 24 als weiteres Drehgelenk mit ebenfalls der X-Achse als Gelenkachse. Das Gelenkelement 24 ist somit um die X-Achse sowohl relativ zu der Spannstruktur 10 als auch dem Andockglied 20 drehbeweglich. Das Andockglied 20 weist einen Anschluss 21 in der Form eines Anschlussflansches auf. Der Anschluss 21 dient der Befestigung am Aktor. Das Anschlussende des Aktors, an dem das Andockglied 20 befestigt wird, ist um eine zu der X-Achse rechtwinklige Y-Achse drehbeweglich. Die beiden Achsen X und Y sind die beiden äußersten Bewegungsachsen des Aktors und bestimmen zwei Freiheitsgrade der Rotation. Von einem zentralen Bereich des Andockglieds 20 ragt in Richtung der X-Achse nach beiden Seiten je ein Schenkel starr ab, um ein Gelenkelement 22 für die gelenkige Verbindung mit dem Gelenkelement 24 zu bilden. Im Ergebnis ist die Spannvorrichtung im Ganzen um die Y-Achse schwenkbar, und die Bauteil-Aufnahmen 1 und 5 sind um die X-Achse drehbar.

Das Strukturteil 11 ist über eine Verbindung 23 steif, d. h. unbeweglich, mit dem Andockglied 20 verbunden. Wenn die Bauteil-Aufnahmen 1 und 5 mittels eines Antriebs des Aktors relativ zu dem Andockglied 20 um die X-Achse gedreht werden, folgt die Spannvorrichtung 10 dieser Drehbewegung daher nicht, sondern bewegt sich entsprechend gegenläufig relativ zu den Bauteil-Aufnahmen 1 und 5. Die Verbindung 23 umfasst zwei Winkelelemente, die je drehsteif über einen Verbindungsring mit dem Gelenkelement 22 und somit drehsteif mit dem Andockglied 20 und am gegenüberliegenden Ende jeweils mit dem Strukturteil 11 verbunden sind. Die Verbindung mit dem Strukturteil 11 kann eine feste, permanente Verbindung, beispielsweise eine Schraubverbindung oder stoffschlüssige Verbindung, oder bevorzugter eine reine Pressverbindung sein.

Das zweite Strukturteil 12, 13 der Spannstruktur 10 ist in einem Drehgelenk drehbeweglich mit dem Träger der Bauteil-Aufnahme 5 verbunden. Das Drehgelenk ist insbesondere in Figur 2 zu erkennen. Der Träger der Bauteil-Aufnahme 5 bildet eines der Gelenkelemente dieses Drehgelenks. Das andere Gelenkelement ist mit 15 bezeichnet und ist zentral und steif an dem Ausleger 12 angeordnet. Die X-Achse ist auch die Gelenkachse dieses Gelenks 5, 15. Das zweite Strukturteil 12, 13 ist U-förmig mit einem durchgehenden Querbalken, der einen zu dem Strukturteil 11 parallelen Ausleger 12 bildet und sich bis über die beiden am weitesten voneinander entfernten Punkte des Umfangsrands der Bauteil-Aufnahmen 1 und 5 und Bauteile B1 und B2 erstreckt. Von den beiden äußeren Enden des Auslegers 12 ragt je ein Verbindungsbalken 13 senkrecht ab und auf das Strukturteil 11 zu. Das Strukturteil 12, 13 weist so die Form eines zu dem Strukturteil 11 offenen "U" auf. Im verbundenen Zustand schließt das Strukturteil 11 die offene Seite des U-förmigen Strukturteils 12, 13.

Die Strukturteile 11 und 12, 13 sind mittels einer automatisch verschließbaren und auch automatisch lösbaren Kupplung steif miteinander verbunden, so dass sie die für das Spannen der Bauteile B1 und B2 erforderliche Spannkraft aufnehmen können. Genauer gesagt wird die Spannkraft mittels der Spannstruktur 10 erzeugt und über die Gelenke 5, 15 und 14, 24 in die Bauteil-Aufnahmen 1 und 5 geleitet. Die Bauteil-Aufnahmen 1 und 5 werden mit der so erzeugten Spannkraft und mit ihren Innenseiten aufeinander zu weisend in Spannrichtung X aufeinander zu gespannt, so dass die Bauteile B1 und B2 über ihren Umfangsrand überall ausreichend fest gegeneinander gedrückt werden.

Die Kupplung besteht aus zwei ersten Kupplungshälften 16, von denen je eine an einem der beiden äußeren Enden des Strukturteils 11 angeordnet ist, und zwei zweiten Kupplungshälften 17, von denen je eine an den beiden im gelösten Zustand freien Enden des Strukturteils 12, 13 angeordnet ist. Die Spannkraft wird durch den Kupplungseingriff der beiden ersten Kupplungshälften 16 und der jeweils zugeordneten zweiten Kupplungshälfte 17 erzeugt. Das Strukturteil 11 wird durch das Zusammenwirken der Kupplungshälften 16 und 17 in Spannrichtung X gegen das Strukturteil 12, 13 gepresst. Das Strukturteil 11 wird so zu einem Joch. Die Spannstruktur 10 schafft zwei geschlossene Kraftflusskreise, die sich in dem zentralen Bereich in den Anschlussstellen der Spannstruktur 10 und der Bauteil-Aufnahme 1 und 5, d.h. in den Gelenken 14 und 15 treffen, von dort über je einen Sockel in die Bauteil-Aufnahmen 1 und 5 eingeleitet und verteilt werden und ferner getrennt die beiden Bügel der Spannstruktur 10, d.h. je eines der Paare von Kupplungshälften 16 und 17 durchziehen.

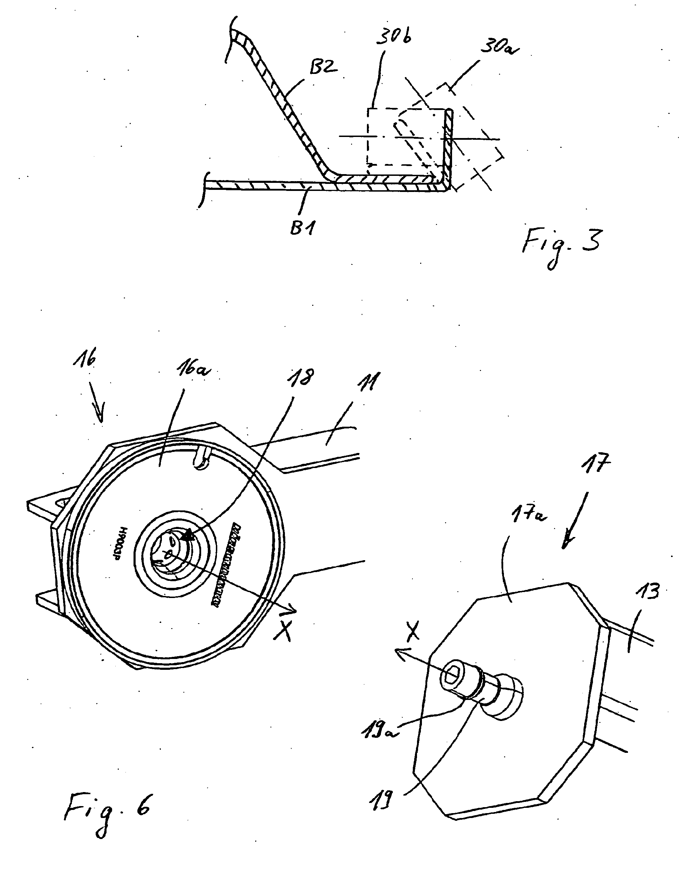

Figur 3 zeigt die Geometrie des Umfangsrands der Bauteile B1 und B2 in einem Querschnitt. Das Bauteil B1 weist umlaufend einen in Richtung auf das Bauteil B2 gewinkelten Flansch auf, der beim Falzen vollständig bis gegen einen Blechrand des Bauteils B2 umgeschlagen und so eine feste Falzverbindung erzeugt wird. Der Flansch des Bauteils B1 wird sukzessive in mehreren Falzschritten, beispielsweise zwei oder drei Falzschritten umgeschlagen. Die Ausgangsgeometrie ist in durchgezogener Linie dargestellt, ein Zwischenschritt und der Zustand nach dem vollständigen Umschlagen sind je strichliert angedeutet. Für ein zweistufiges Falzen erforderliche Falzrollen 30a und 30b sind ebenfalls in gestrichelten Linien skizziert.

Die Spannstruktur 10 ist wie bereits erwähnt zweiteilig, und die beiden Teile, nämlich das Strukturteil 11 mit dem Gelenkelement 14 einerseits und das Strukturteil 12, 13 mit dem Gelenkelement 15 andererseits, sind über eine Kupplung lösbar miteinander verbunden. Hierdurch entstehen auch zwei voneinander lösbare und im gelösten Zustand separat voneinander handhabbare Spannvorrichtungsteile, nämlich ein erstes Spannvorrichtungsteil mit der Bauteil-Aufnahme 1 und ein zweites Spannvorrichtungsteil mit der Bauteil-Aufnahme 5 und dem jeweils zugeordneten Teil der Spannstruktur 10. Die beiden Spannvorrichtungsteile sind über die gleiche Kupplung voneinander lösbar und im gelösten Zustand separat voneinander handhabbar.

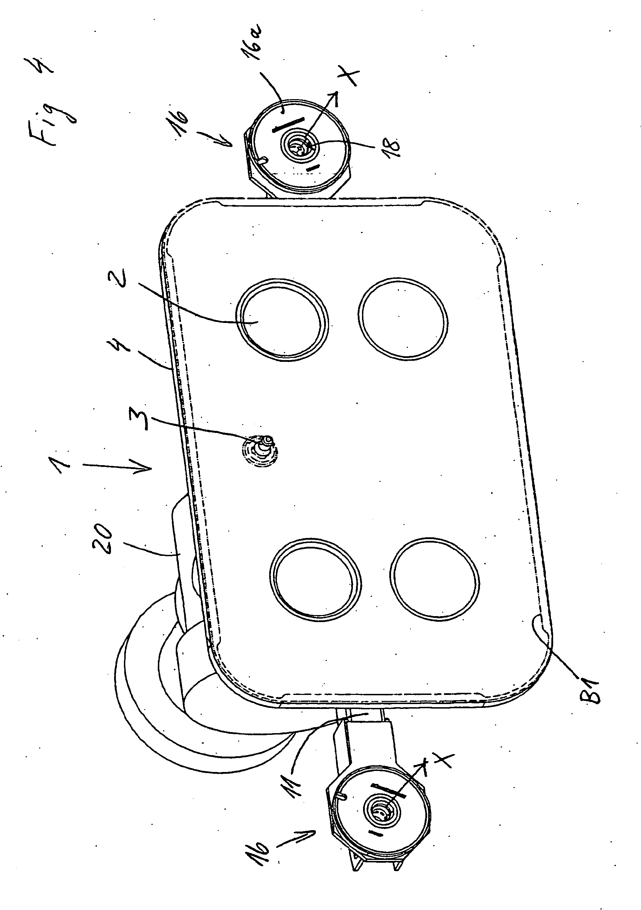

Figur 4 zeigt das erste Spannvorrichtungsteil in einer perspektivischen Sicht auf die Innenseite des Aufnahmebetts 4. Das Bauteil B1 ist in gestrichelter Linie angedeutet, aber durchsichtig dargestellt. Zu erkennen sind die das Aufnahmebett 4 durchgreifenden Greifer 2, die über die Innenseite des Aufnahmebetts 4 verteilt angeordnet sind. Zu erkennen ist des Weiteren das Positionierelement 3, welches das Aufnahmebett 4 durchragt und über dessen Innenseite hinaus in Spannrichtung X der Bauteil-Aufnahme 1 vorragt. Figur 4 zeigt auch die zur Spannrichtung X hin offenen zweiten Kupplungshälften 16. Die Kupplungshälften 16 weisen je eine Andockseite 16a auf, die in die Spannrichtung X gewandt ist. Die Kupplungshälften 16 weisen an ihrer Andockseite 16a je eine tellerartige, quer zu Spannrichtung X erstreckte Andockfläche für die jeweils zugeordnete der Kupplungshälften 17 auf.

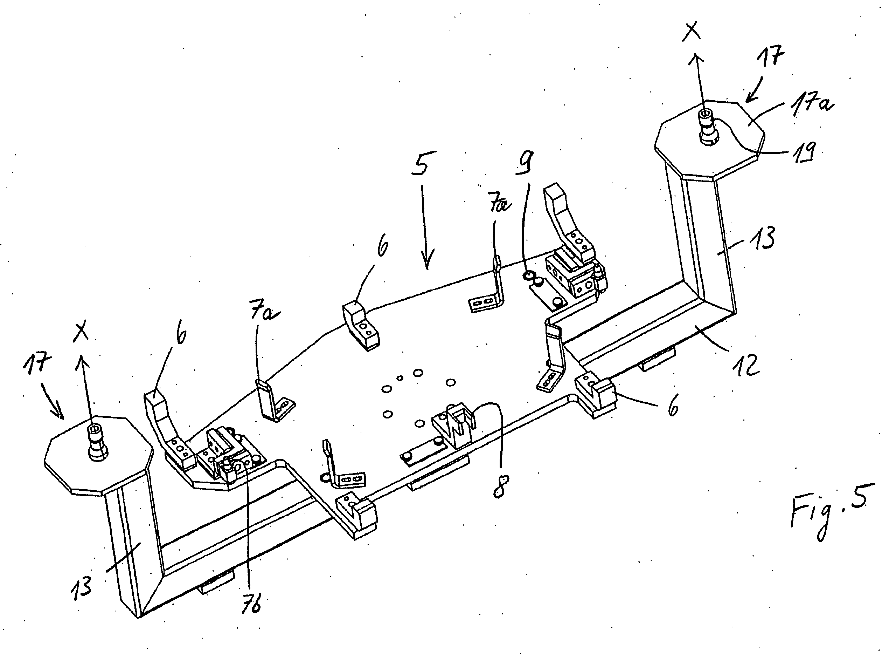

Figur 5 zeigt das zweite Spannvorrichtungsteil separat in einer perspektivischen Sicht auf die Innenseite der Bauteil-Aufnahme 5. Über deren Träger verteilt sind mehrere der Auflagen 6 angeordnet, auf die das zweite Bauteil B2 auflegbar ist. Der Träger bildet mit den Auflagen 6 somit ein Aufnahmebett 6 für das zweite Bauteil B2. Das Positionierelement 8 ist für das Zusammenwirken mit dem als Zentrierstift gebildeten Positionierelement 3 als Stiftaufnahme gebildet. Die als Einweiser dienenden Positionierelemente 7 ragen in Spannrichtung X der Bauteil-Aufnahme 5 soweit von dem Träger 5 vor, dass sie bei dem Auflegen des Bauteils B2 mit dessen der Positionierung dienenden Konturen in einen Führungskontakt gelangen, bevor das Bauteil B2 auf den Auflagen 6 aufliegt. Die Bauteil-Aufnahme 5 weist weitere Positionierelemente 9 auf, die der Positionierung der Bauteil-Aufnahme 5 in einer Ablage einer Fügestation dienen. Die Positionierelemente 9 sind beispielhaft als Bohrungen in dem Träger gebildet. In der Ablage der Fügestation sind entsprechend Positioniergegenelemente angeordnet, im Ausführungsbeispiel aufragende Positionierstifte, die bei dem Positionieren der Bauteil-Aufnahme 5 in der Ablage in die Bohrungen einfahren. Das zweite Spannvorrichtungsteil wird in der Ablage der Fügestation mit seiner Unterseite auf einer Unterlage in einer vorgegebenen Position abgelegt, so dass es auf der Unterlage ruht und in fünf Freiheitsgraden der Bewegung mittels des Strukturteils 12, 13 fixiert ist. Die Festlegung des sechsten Freiheitsgrads, im Ausführungsbeispiel der Drehbeweglichkeit der Bauteil-Aufnahme 5 relativ zu dem Strukturteil 12, 13, wird durch das Zusammenwirken besagter Positionierelemente 9 und Positioniergegenelemente bewirkt. Anstatt die Positionierelemente 9 und die Positioniergegenelemente durch Bohrungen und Stifte bereitzustellen, kann auch der Außenrand des Trägers der Bauteil-Aufnahme 5 als Positionierelement des zweiten Spannvorrichtungsteils verwendet werden; in der Ablage wäre ein entsprechender Anschlag für den Träger vorzusehen. Figur 5 zeigt des Weiteren die beiden zweiten Kupplungshälften 17 mit Blick auf deren Andockseite 17a. Die beiden Kupplungshälften 17 weisen an ihren Andockseiten 17a je eine Andockfläche für die zugeordnete Kupplungshälfte 16 auf. Die Andockflächen der Kupplungshälften 17 sind ebenfalls tellerartig und erstrecken sich quer zu der Spannrichtung X.

Figur 6 zeigt eine erste Kupplungshälfte 16 und eine zweite Kupplungshälfte 17 losgelöst von der Spannstruktur 10 im Vergleich nebeneinander. Die beiden zusammenwirkenden anderen Kupplungshälften 16 und 17 entsprechen den in Figur 6 dargestellten. Die Kupplungshälfte 17 weist einen stift- oder bolzenförmigen Kupplungsfinger 19 auf, der an der Andockseite 17a in Spannrichtung X von der Andockfläche vorragt. Der Kupplungsfinger 17 ist bezüglich der Andockfläche zentral angeordnet. Er weist in einem mittleren Bereich umlaufend eine Verdickung 19a auf. Die Verdickung 19a bildet für die erste Kupplungshälfte 16 einen hintergreifbaren Vorsprung. Die Kupplungshälfte 16 weist eine Kupplungsaufnahme 18 für den Kupplungsfinger 19 auf. Die Kupplungsaufnahme 18 ist entsprechend der Form des Kupplungsfingers 19 zylindrisch und an der Andockseite 16a offen, so dass der Kupplungsfinger 19 von der Bauteil-Aufnahme 5 aus gesehen in deren Spannrichtung X in die Kupplungsaufnahme 18 einfahren kann, um den Kupplungseingriff herzustellen und dadurch die beiden Spannvorrichtungsteile fest miteinander zu verbinden. Die Kupplungsaufnahme 18 ist bezüglich der Andockfläche der Kupplungshälfte 17 ebenfalls zentral angeordnet. Die Kupplungshälfte 16 umfasst ferner mehrere Eingriffselemente, beispielsweise Kugeln, Stifte oder Bolzen, die quer zu der Spannrichtung X, vorzugsweise rechtwinklig zu der Spannrichtung X, beweglich geführt sind. In der Kupplungsaufnahme 18 sind seitliche Bohrungen erkennbar. Durch jede der Bohrungen ragt im Kupplungseingriff jeweils eines der Eingriffselemente in den Hohlraum der Kupplungsaufnahme 18 hinein radial vor. Die Eingriffselemente hintergreifen im Kupplungseingriff den von der Verdickung 19a gebildeten Vorsprung und halten den Kupplungsfinger 19 so in der Kupplungsaufnahme 18. Die Verdickung 19a weitet sich in Spannrichtung X der zweiten Bauteil-Aufnahme 5 radial auf, entweder einfach konisch oder vorzugsweise trompetenförmig progressiv, so dass der Kupplungsfinger 19 durch die hintergreifenden Eingriffselemente der Kupplungshälfte 16 in Spannrichtung X der Bauteil-Aufnahme 5 in die Kupplungsaufnahme 18 hineingezogen wird und die beiden Spannvorrichtungsteile, insbesondere die beiden Bauteil-Aufnahmen 1 und 5, in ihre jeweilige Spannrichtung X aufeinander zu gespannt werden. Die Andockseiten 16a und 17a der Kupplungshälften 16 und 17 sind ferner so gebildet, dass die Andockflächen durch den Kupplungseingriff gegeneinander gepresst werden. Auf diese Weise wird mittels des Kupplungseingriffs eine definierte Spannkraft in die Bauteil-Aufnahmen 1 und 5 eingeleitet. Die Abstände zwischen den Eingriffselementen und der Andockfläche der Kupplungshälften 16 und des Vorsprungs 19a und der Andockfläche der Kupplungshälfte 17 sind entsprechend gewählt.

Die Eingriffselemente der Kupplungshälfte 16 werden im Kupplungseingriff blockiert bzw. verriegelt. Die beiden Kupplungshälften 16 weisen für diesen Zweck je ein Blockierelement für die Eingriffselemente auf. Gegebenenfalls können auch mehrere Blockierelemente pro Kupplungshälfte 16 vorgesehen sein. Das Blockierelement ist in der betreffenden Kupplungshälfte 16 beispielsweise in Spannrichtung X axial hin und her beweglich aufgenommen und an beiden Stirnseiten mit einer Pneumatikkraft beaufschlagbar. Durch wahlweise Beaufschlagung einer der beiden Seiten, wird das Blockierelement wahlweise in eine Blockierposition oder eine Freigabeposition bewegt. Das Blockierelement bildet einen zweiseitig beaufschlagbaren Kolben. In der Blockierposition verriegelt es die Eingriffselemente der betreffenden Kupplungshälfte 16 im Kupplungseingriff, und in der Freigabeposition gibt es die Eingriffselemente frei, so dass der Kupplungseingriff gelöst werden kann. Die Kupplungshälften 16 werden über das Strukturteil 11 mit der erforderlichen Druckluft versorgt. Das Blockierelement kann beispielsweise in Spannrichtung X konisch geformt sein und in der Blockierposition mit seinem dickeren Bereich in der axialen Überdeckung zu den Eingriffselementen liegen, während es in der Freigabeposition mit seinem dünneren Bereich auf die axiale Höhe der Eingriffselemente gebracht wird und die Eingriffselemente daher zum Lösen des Kupplungseingriffs nach radial außen nachgeben können. Die Blockierung kann anstatt pneumatisch auch elektrisch bewirkt werden. Die Druckluftversorgung entfällt in solchen Ausführungen; stattdessen ist pro Kupplungshälfte 16 ein Elektroantrieb zur Betätigung der Blockierelemente vorgesehen und wird mit entsprechenden Stellsignalen angesteuert, vorzugsweise von einer Aktorsteuerung.

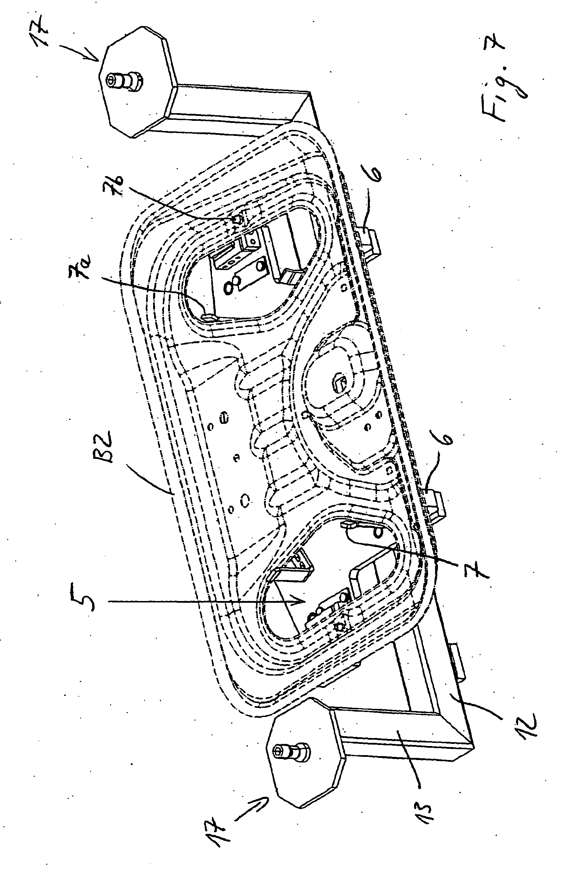

Figur 7 zeigt nochmals das zweite Spannvorrichtungsteil, allerdings mit aufgelegtem Bauteil B2. Das zweite Spannvorrichtungsteil ist wie in Figur 7 dargestellt in der Ablage der Fügestation abgelegt und kann mit dem bereits aufgenommenen Bauteil B2 von dem ersten Spannvorrichtungsteil aufgenommen werden. Das zweite Spannvorrichtungsteil ist in der Ablage mittels des Auslegers 12 und der Positionierelemente 9 in einer definierten Position abgelegt, so dass der Aktor mit dem ersten Spannvorrichtungsteil das abgelegte zweite Spannvorrichtungsteil programmgesteuert anfahren und aufnehmen kann. In der letzten Phase des Anfahrens bewegt der Aktor das erste Spannvorrichtungsteil in dessen Spannrichtung X, so dass die Kupplungsfinger 19 der beiden Kupplungshälften 17 in die Kupplungsaufnahmen 18 einfahren und von den Eingriffselementen der ersten Kupplungshälften 16 hintergriffen werden. Der so hergestellte Kupplungseingriff wird durch Betätigung der Blockierelemente der Kupplungshälften 16 blockiert, so dass die feste Verbindung der Spannvorrichtungsteile hergestellt ist.

Das zweite Spannvorrichtungsteil dient in der Fügestation nicht nur dem Ablegen der Bauteile B2 und somit dem Bestücken der Fügestation, sondern wird in weiterer Funktion auch als Entnahmeeinrichtung für den geschaffenen Fügeverbund verwendet.

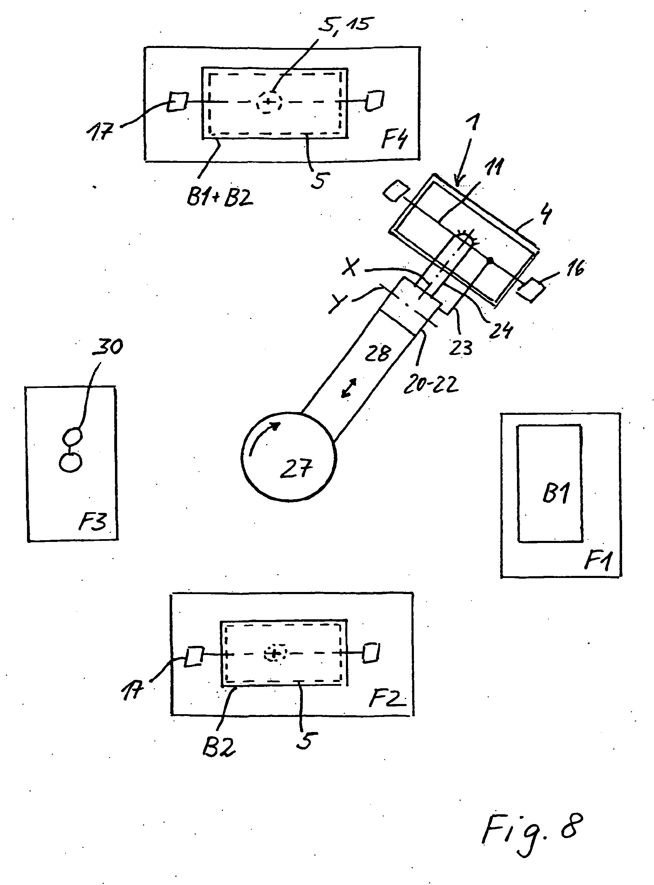

Figur 8 zeigt beispielhaft eine Fügestation in schematischer Darstellung für die Durchführung eines ersten Fügeverfahrens. In der Fügestation ist ein Roboter angeordnet, der eine ortsfeste, um eine Hochachse drehbare Basis 27 und einen von der Basis 27 abragenden Roboterarm 28 aufweist, der eine Kette aus steifen Gelenkelementen und die Gelenkelemente paarweise verbindenden Gelenken bildet, die sich von der Basis 27 bis zu einem letzten der Gelenkelemente am Ende des Roboterarms 28 erstreckt. An dem den Aktor bildenden Roboterarm 28 ist das erste Spannvorrichtungsteil mittels des Andockglieds 20 befestigt (Figuren 1 und 2), so dass das Gelenkelement 24 das letzte Gelenkelement des Roboterarms 28 ist. Um die Roboterbasis 27 sind vier Substationen F1 bis F4 verteilt angeordnet, die der Roboter bei einer Umdrehung nacheinander anfährt. In der ersten Substation F1 sind übereinander mehrere erste Bauteile B1 angeordnet. Der Roboter nimmt mit dem ersten Spannvorrichtungsteil das oberste Bauteil B1 auf, indem er das erste Spannvorrichtungsteil relativ zu dem Bauteil B1 positioniert und nach der Positionierung die Greifer 2 aktiviert, so dass das Bauteil B1 saugend an dem Aufnahmebett 4 gehalten wird.

Im nächsten Schritt dreht der Roboter weiter zur zweiten Substation F2. Die zweite Substation F2 ist die Ablage für das zweite Spannvorrichtungsteil. Das zweite Spannvorrichtungsteil hat bereits ein Bauteil B2 aufgenommen. Das betreffende Bauteil B2 wurde zuvor entweder maschinell oder per Hand auf dem Aufnahmebett 6 der zweiten Bauteileaufnahme 5 abgelegt. Der Roboter dockt das erste Spannvorrichtungsteil an dem zweiten Spannvorrichtungsteil an, nämlich die beiden ersten Kupplungshälften 16 an den beiden zweiten Kupplungshälften 17, und blockiert die beiden Blockierelemente der Kupplungshälften 16, so dass der feste Kupplungseingriff hergestellt ist. Die beiden Bauteile B1 und B2 sind nun in der Fügeposition relativ zueinander gespannt.

Der Roboter bewegt die Spannvorrichtung mit den in der Fügeposition befindlichen Bauteilen B1 und B2 zu der dritten Substation F3, der eigentlichen Fügestation. In der Station F3 ist ein Fügewerkzeug 30, vorzugsweise ein Rollfalzwerkzeug, ortsfest angeordnet. Der Roboter positioniert die Spannvorrichtung so, dass das Fügewerkzeug 30 an einer bestimmten Stelle der zu schaffenden Fügeverbindung ansetzt. Nachdem diese Startposition in der Station F3 erreicht ist, bewegt der Roboter die Spannvorrichtung in vorgegebener Weise so, dass der Umfangsrand in einem geschlossenen Umlauf sozusagen durch das Fügewerkzeug 30 gezogen wird. Diese Bewegung der Spannvorrichtung und entsprechend der gespannten Bauteile B1 und B2 umfasst insbesondere eine Drehbewegung der Spannvorrichtung um die X-Achse (Figuren 1 und 2). Vorzugsweise besteht sie aus solch einer Drehbewegung. Da die Bauteil-Aufnahmen 1 und 5 steif, insbesondere drehsteif mit der X-Achse des letzten Gelenkelements 24 des Roboterarms 28 und die Spannstruktur 10 mit der unmittelbar vorgelagerten Y-Achse steif verbunden und in diesem Sinne an die Y-Achse gefesselt ist, drehen die Bauteil-Aufnahmen 1 und 5 relativ zu der Spannstruktur 10 um die X-Achse. Das Fügewerkzeug 30 kann sich daher in einem geschlossenen Umlauf längs des Umfangsrands der Bauteile B1 und B2 relativ zu den Bauteilen B1 und B2 unbehindert von der Spannstruktur 10 bewegen. Im gewählten Ausführungsbeispiel mit der rahmenartigen Spannstruktur 10 befindet sich das Fügewerkzeug 30 während des Fügeprozesses stets an einem Ort zwischen den beiden Verbindungsbalken 13 und den Kupplungshälften 16 und 17. Diese äußeren Bereiche der Spannstruktur 10 laufen dem Fügewerkzeug 30 vor bzw. nach, vom Standpunkt der Bauteil-Aufnahmen 1 und 5 aus betrachtet. Um den Fügeprozess zu beschleunigen, können in der Station F3 beispielsweise zwei Werkzeuge 30 jeweils ortsfest angeordnet sein und auf einander gegenüberliegende Seiten des Umfangsrands wirken.

Nach Schaffung der Fügeverbindung bewegt der Roboter die Spannvorrichtung in die letzte, vierte Substation F4. Die Spannvorrichtung wird positioniert und auf der Unterseite des zweiten Spannvorrichtungsteils in der Station F4 abgesetzt. Nach dem Absetzen löst der Roboter die Kupplung 16, 17 und hebt das erste Spannvorrichtungsteil von dem abgesetzten zweiten Spannvorrichtungsteil nach oben ab. Während der Roboter den beschriebenen Arbeitszyklus erneut ausführt, wird der aus den Bauteilen B1 und B2 gebildete Fügeverbund B1 und B2 aus dem zweiten Spannvorrichtungsteil genommen. Das zweite Spannvorrichtungsteil steht nun wieder für die Aufnahme eines neuen zweiten Bauteils B2 zur Verfügung. Falls die Taktzeiten in den einzelnen Stationen F1 bis F4 es zulassen, wird das gleiche zweite Spannvorrichtungsteil für den nächstfolgenden Arbeitszyklus wieder in der zweiten Station F2 positioniert. Falls die Taktzeiten der einzelnen Stationen dies nicht zulassen, verfügt die Station über ein weiteres zweites Spannvorrichtungsteil, um die beiden Spannvorrichtungsteile alternierend einzusetzen.

### Bezugszeichen:

- 1: Bauteil-Aufnahme
- 2: Greifer
- 3: Positionierelement, Zentrierstift
- 4: Aufnahmebett, Falzbett
- 5: Bauteil-Aufnahme
- 6: Aufnahmebett, Auflagen
- 7a: Positionierelement, Einweiser
- 7b: Positionierelement, Stift
- 8: Positionierelement, Stiftaufnahme
- 9: Positionierelement
- 10: Spannstruktur
- 11: Strukturteil, Ausleger
- 12: Strukturteil, Ausleger
- 13: Strukturteil
- 14: Gelenkelement
- 15: Gelenkelement
- 16: Kupplungshälfte
- 16a: Andockseite
- 17: Kupplungshälfte
- 17a: Andockseite
- 18: Kupplungsglied, Kupplungsaufnahme
- 19: Kupplungsglied, Kupplungsfinger
- 19a: Verdickung
- 20: Andockglied
- 21: Anschluss
- 22: Gelenkelement
- 23: Verbindung
- 24: Gelenkelement
- 25: -
- 26: -
- 27: Roboterbasis
- 28: Roboterarm
- 29: -
- 30: Fügewerkzeug
- 30a: Falzrolle
- 30b: Gegenrolle

- B1: Bauteil
- B2: Bauteil
- X: Spannachse, Drehachse
- Y: Drehachse
- F1-F4: Substationen

## Patentansprüche

1. Kombination einer Spannvorrichtung für zu fügende Bauteile (B1, B2) und eines die Spannvorrichtung tragenden Roboterarms (28) mit mehreren Gelenken und die Gelenke paarweise bildenden Gelenkelementen (20-22, 24), die Spannvorrichtung umfassend:
a) eine erste Bauteil-Aufnahme (1) für ein erstes Bauteil (B1),
b) eine zweite Bauteil-Aufnahme (5) für ein zweites Bauteil (B2),
c) und eine Spannstruktur (10), welche die Bauteil-Aufnahmen (1, 5) in einer Fügeposition relativ zueinander fixiert
d) und die sich bei in Fügeposition befindlichen Bauteil-Aufnahmen (1, 5) von einer Außenseite der ersten Bauteil-Aufnahme (1) bis zu einer von der Außenseite der ersten Bauteil-Aufnahme (1) abgewandten Außenseite der zweiten Bauteil-Aufnahme (5) erstreckt und je einen Umfangsrand der Bauteil-Aufnahmen (1, 5) umgreift,
**dadurch gekennzeichnet, dass**
e) eine der Bauteil-Aufnahmen (1, 5) mit einem (24) der Gelenkelemente und die Spannstruktur (10) mit einem anderen (20-22) der Gelenkelemente des Roboterarms (28) fest verbunden ist
f) und der Roboterarm (28) für die Relativbewegbarkeit zwischen der Spannstruktur (10) und den in der Fügeposition befindlichen Bauteil-Aufnahmen (1, 5) sorgt.

2. Kombination nach Anspruch 1, **dadurch gekennzeichnet, dass** die Spannstruktur (10) wenigstens einen Bügel (11-13) bildet, der den Umfangsrand umgreift.

3. Kombination nach einem der vorhergehenden Ansprüche, **dadurch gekennzeichnet, dass** die Spannstruktur (10) einen Rahmen (11-13) bildet, vorzugsweise einen zumindest im Wesentlichen planen Rahmen, der die Bauteil-Aufnahmen (1, 5) an zwei Seiten des Umfangsrands umgreift.

4. Kombination nach einem der vorhergehenden Ansprüche, **dadurch gekennzeichnet, dass** zumindest ein den Umfangsrand der Bauteil-Aufnahmen (1,5) umgreifender Bereich (11-13) der Spannstruktur (10) relativ zu dem Umfangsrand der Bauteil-Aufnahmen (1, 5) beweglich ist, so dass die Position des umgreifenden Bereichs (11-13) in Längsrichtung des Umfangsrands verstellt werden kann.

5. Kombination nach einem der vorhergehenden Ansprüche, **dadurch gekennzeichnet, dass** die Bauteil-Aufnahmen (1, 5) mittels der Spannstruktur (10) in eine Spannrichtung (X) aufeinander zu gespannt oder spannbar sind und der den Umfangsrand umgreifende Bereich (11-13) der Spannstruktur (10) relativ zu den Bauteil-Aufnahmen (1, 5) quer zu der Spannrichtung (X) bewegbar, vorzugsweise um eine mit der Spannrichtung (X) zusammenfallende Drehachse (X) schwenkbar ist.

6. Kombination nach dem vorhergehenden Anspruch, **dadurch gekennzeichnet, dass** die Spannstruktur (10) um die Drehachse (X) im Ganzen relativ zu den Bauteil-Aufnahmen bewegbar, vorzugsweise schwenkbar oder drehbar ist.

7. Kombination nach einem der vorhergehenden Ansprüche, **dadurch gekennzeichnet, dass** die Spannstruktur (10) in einem ersten Gelenk (14, 24) beweglich mit der ersten Bauteil-Aufnahme (1) und in einem zweiten Gelenk (5, 15) beweglich mit der zweiten Bauteil-Aufnahme (5) verbunden ist.

8. Kombination nach dem vorhergehenden Anspruch, **dadurch gekennzeichnet, dass** das erste Gelenk (14, 24) und das zweite Gelenk (5, 15) eine gemeinsame Gelenkachse (X) aufweisen.

9. Kombination nach einem der zwei vorhergehenden Ansprüche, **dadurch gekennzeichnet, dass** das erste Gelenk (14, 24) und das zweite Gelenk (5, 15) je in einem zentralen Bereich der Bauteil-Aufnahmen (1, 5) angeordnet sind.

10. Kombination nach einem der vorhergehenden Ansprüche, **dadurch gekennzeichnet, dass** die Spannstruktur (10) ein mit der ersten Bauteil-Aufnahme (1) verbundenes erstes Strukturteil (11) und ein mit der zweiten Bauteil-Aufnahme (5) verbundenes zweites Strukturteil (12, 13) umfasst und die Strukturteile (11 und 12, 13) miteinander verbindbar und voneinander lösbar sind.

11. Kombination nach dem vorhergehenden Anspruch, umfassend eine automatisch betätigbare Kupplung (16, 17) mit einer ersten Kupplungshälfte (16), die mit dem ersten Strukturteil (11) verbunden ist, und einer zweiten Kupplungshälfte (17), die mit dem zweiten Strukturteil (12, 13) verbunden ist.

12. Kombination nach dem vorhergehenden Anspruch, wobei die Kupplung (16, 17) elektrisch oder fluidisch, vorzugsweise pneumatisch, betätigbar ist.

13. Kombination nach einem der zwei vorhergehenden Ansprüche, **dadurch gekennzeichnet, dass** die Bauteil-Aufnahmen (1, 5) mittels der Spannstruktur (10) in eine Spannrichtung (X) aufeinander zu gespannt oder spannbar sind und die Kupplungshälften (16, 17) in einem Kupplungseingriff in Spannrichtung (X) nicht beweglich miteinander verbunden sind, vorzugsweise in Spannrichtung (X) miteinander verspannt sind.

14. Kombination nach einem der vorhergehenden Ansprüche, **dadurch gekennzeichnet, dass** wenigstens eine der Bauteil-Aufnahmen (1, 5) für eine hängende Aufnahme eines der Bauteile (B1, B2) wenigstens einen Greifer (2), vorzugsweise Sauggreifer, umfasst.

15. Kombination nach einem der vorhergehenden Ansprüche, **dadurch gekennzeichnet, dass** wenigstens eine der Bauteil-Aufnahmen (1, 5) Auflagen (6) zum Auflegen eines der Bauteile (B1, B2) und vorzugsweise wenigstens ein Positionierelement (7) zum Positionieren des Bauteils (B2) relativ zu der Bauteil-Aufnahme (5) aufweist.

16. Kombination nach einem der vorhergehenden Ansprüche, umfassend ein Andockglied (20-22) und ein Anschlussgelenk (20-22, 24), in dem die erste Bauteil-Aufnahme (1) beweglich, vorzugsweise drehbeweglich, mit dem Andockglied (20-22) verbunden ist, wobei das Andockglied (20-22) einen Anschluss (21) für eine mechanische Verbindung mit dem Roboterarm (28) aufweist.

17. Kombination nach dem vorhergehenden Anspruch in Kombination mit Anspruch 4, **dadurch gekennzeichnet, dass** zumindest der den Umfangsrand der Bauteil-Aufnahmen (1, 5) umgreifende Bereich (11-13) der Spannstruktur (10), vorzugsweise die Spannstruktur (10) im Ganzen, mit dem Andockglied (20-22) bezüglich eines Bewegungsfreiheitsgrads des Anschlussgelenks (20-22, 24) nicht beweglich verbunden ist.

18. Kombination nach einem der vorhergehenden Ansprüche, **dadurch gekennzeichnet, dass** das Gelenkelement (24), mit dem die eine der Bauteil-Aufnahmen (1, 5) verbunden ist, ein im Raum frei bewegliches Ende des Roboterarms (28) bildet.

19. Kombination nach einem der vorhergehenden Ansprüche, **dadurch gekennzeichnet, dass** der Roboterarm (28) eine Gelenkkette bildet, die sich von einer Basis (27) des Roboters bis zu einem relativ zu der Basis (27) im Raum beweglichen Ende des Roboterarms (28) erstreckt, und dass das Gelenkelement (20-22), mit dem die Spannstruktur (10) verbunden ist, in der Gelenkkette der Basis (27) näher ist, als das Gelenkelement (24), mit dem die eine der Bauteil-Aufnahmen (1, 5) verbunden ist.

20. Kombination nach einem der vorhergehenden Ansprüche, **dadurch gekennzeichnet, dass** eine der Bauteil-Aufnahmen (1,5) ein Falzbett (4) umfasst.

21. Kombination nach einem der vorhergehenden Ansprüche in Kombination mit Anspruch 13, **dadurch gekennzeichnet, dass** jede der Kupplungshälften (16; 17) eine in dem Kupplungseingriff die jeweils andere Kupplungshälfte kontaktierende Andockseite (16a; 17a) hat, die in die Spannrichtung (X) weist.

22. Fügevorrichtung zum Fügen von Bauteilen (B1, B2), die Fügevorrichtung umfassend:
a) ein Fügewerkzeug (30), vorzugsweise eine Falzeinrichtung, mittels dem die Bauteile (B1, B2) in einer Fügeposition längs eines gemeinsamen Umfangsrands miteinander verbindbar sind,
b) eine Bauteil-Aufnahmeeinrichtung (1, 5) zum Aufnehmen der Bauteile (B1, B2)
c) und eine Spannstruktur (10), mittels der die aufgenommenen Bauteile (B1, B2) relativ zueinander in einer Fügeposition aufeinander zu spannbar sind,
d) wobei die Spannstruktur (10) bei in Fügeposition befindlichen Bauteilen (B1, B2) deren gemeinsamen Umfangsrand und die Bauteil-Aufnahmeeinrichtung (1, 5) umgreift,
e) wobei die Fügevorrichtung eine Kombination einer Spannvorrichtung für zu fügende Bauteile (B1, B2) und eines die Spannvorrichtung tragenden Roboterarms (28) nach einem der vorhergehenden Ansprüche umfasst, und wobei die Spannvorrichtung der Kombination die Bauteil-Aufnahmeeinrichtung (1, 5) und die Spannstruktur (10) bildet.

23. Verfahren zum Fügen von Bauteilen, bei dem
a) die Bauteile (B1, B2) mittels einer Kombination eine Kombination einer Spannvorrichtung für zu fügende Bauteile (B1, B2) und eines die Spannvorrichtung tragenden Roboterarms (28) nach einem der Ansprüche 1 bis 22 relativ zueinander in einer Fügeposition gespannt werden,
b) und längs eines gemeinsamen Umfangsrands mittels eines Fügewerkzeugs (30; 31) miteinander verbunden werden, vorzugsweise umlaufend.

24. Verfahren nach dem vorhergehenden Anspruch, bei dem eines aus zueinander gespannten Bauteil-Aufnahmen (1, 5) und Fügewerkzeug (30; 31) bei dem Verbinden der Bauteile (B1, B2) relativ zu dem anderen im Raum bewegt wird, so dass die Bauteile (B1, B2) längs eines durch die Relativbewegung zwischen den Bauteil-Aufnahmen (1, 5) und dem Fügewerkzeug (30; 31) bestimmten Pfads miteinander zu dem Fügeverbund verbunden werden.

25. Verfahren nach dem vorhergehenden Anspruch, bei dem das andere aus Bauteil-Aufnahmen (1, 5) und Fügewerkzeug (30; 31) zumindest bei dem Verbinden der Bauteile (B1, B2) ortsfest ist.

26. Verfahren nach einem der zwei vorhergehenden Ansprüche, bei dem wenigstens eines aus Spannstruktur (10) und Fügewerkzeug (30) bei dem Verbinden im Raum stillsteht.

27. Verfahren nach einem der Ansprüche 23 bis 26, bei dem das Fügewerkzeug (30; 31) wenigstens eine Falzrolle umfasst und die Bauteile (B1, B2) durch Rollfalzen miteinander verbunden werden.

28. Verfahren nach dem vorhergehenden Anspruch, bei dem ein Aufnahmebett (4) der ersten Bauteil-Aufnahme (1) als Falzbett verwendet wird.

29. Verfahren nach einem der Ansprüche 23 bis 28, bei dem die Position zumindest des den Umfangsrand umgreifenden Bereichs der Spannstruktur (10) relativ zu den Bauteil-Aufnahmen (1, 5) in Längsrichtung des Umfangsrands verstellt wird.

30. Verfahren nach dem vorhergehenden Anspruch, bei dem sich der den Umfangsrand umgreifende Bereich der Spannstruktur (10) und das Fügewerkzeug (30; 31) relativ zu den Bauteil-Aufnahmen (1, 5) entlang des Umfangsrands zumindest abschnittsweise in die gleiche Richtung bewegen.

## Claims

1. A combination of a chucking device for component parts (B1, B2) to be joined and a robot arm (28) which bears the chucking device and comprises a number of joints and joint elements (20-22, 24) which in pairs form the joints, said chucking device comprising:
a) a first component part receptacle (1) for a first component part (B1);
b) a second component part receptacle (5) for a second component part (B2);
c) and a chucking structure (10) which fixes the component part receptacles (1, 5) in a joining position relative to each other
d) and extends, when the component part receptacles (1, 5) are situated in the joining position, from an outer side of the first component part receptacle (1) to an outer side of the second component part receptacle (5) which faces away from the outer side of the first component part receptacle (1), and encompasses a circumferential edge of each of the component part receptacles (1,5),
**characterised in that**
e) one of the component part receptacles (1, 5) is fixedly connected to one (24) of the joint elements, and the chucking structure (10) is fixedly connected to another (20-22) of the joint elements of the robot arm (28),
f) and the robot arm (28) ensures that relative movement is possible between the chucking structure (10) and the component part receptacles (1, 5) situated in the joining position.

2. The combination according to claim 1, **characterised in that** the chucking structure (10) forms at least one bracket (11-13) which encompasses the circumferential edge.

3. The combination according to any one of the preceding claims, **characterised in that** the chucking structure (10) forms a frame (11-13), preferably an at least substantially planar frame, which encompasses the component part receptacles (1, 5) on two sides of the circumferential edge.

4. The combination according to any one of the preceding claims, **characterised in that** at least one region (11-13) of the chucking structure (10) which encompasses the circumferential edge of the component part receptacles (1, 5) can be moved relative to the circumferential edge of the component part receptacles (1, 5) such that the position of the encompassing region (11-13) can be adjusted in the longitudinal direction of the circumferential edge.

5. The combination according to any one of the preceding claims, **characterised in that** the component part receptacles (1, 5) are or can be tensed towards each other in a tensing direction (X) by means of the chucking structure (10), and the region (11-13) of the chucking structure (10) which encompasses the circumferential edge can be moved relative to the component part receptacles (1, 5) transverse to the tensing direction (X), preferably pivoted about a rotational axis (X) which coincides with the tensing direction (X).

6. The combination according to the preceding claim, **characterised in that** the chucking structure (10) can be moved, preferably pivoted or rotated, about the rotational axis (X) as a whole relative to the component part receptacles.

7. The combination according to any one of the preceding claims, **characterised in that** the chucking structure (10) is connected to the first component part receptacle (1) such that it can be moved in a first joint (14, 24) and is connected to the second component part receptacle (5) such that it can be moved in a second joint (5, 15).

8. The combination according to the preceding claim, **characterised in that** the first joint (14, 24) and the second joint (5, 15) exhibit a common joint axis (X).

9. The combination according to any one of the preceding two claims, **characterised in that** the first joint (14, 24) and the second joint (5, 15) are each arranged in a central region of the component part receptacles (1,5).

10. The combination according to any one of the preceding claims, **characterised in that** the chucking structure (10) comprises a first structural part (11) which is connected to the first component part receptacle (1), and a second structural part (12, 13) which is connected to the second component part receptacle (5), and the structural parts (11 and 12, 13) can be connected to and detached from each other.

11. The combination according to the preceding claim, comprising an automatically operable coupling (16, 17) comprising a first coupling half (16) which is connected to the first structural part (11), and a second coupling half (17) which is connected to the second structural part (12, 13).

12. The combination according to the preceding claim, wherein the coupling (16, 17) can be electrically or fluidically, preferably pneumatically, operated.

13. The combination according to any one of the preceding two claims, **characterised in that** the component part receptacles (1, 5) are or can be tensed towards each other in a tensing direction (X) by means of the chucking structure (10), and the coupling halves (16, 17) are connected to each other in a coupling engagement such that they cannot be moved in the tensing direction (X) and are preferably tensed against each other in the tensing direction (X).

14. The combination according to any one of the preceding claims, **characterised in that** at least one of the component part receptacles (1, 5) comprises at least one gripper (2), preferably a suction gripper, for the suspended accommodation of one of the component parts (B1, B2).

15. The combination according to any one of the preceding claims, **characterised in that** at least one of the component part receptacles (1, 5) comprises supports (6) for placing one of the component parts (B1, B2) on and preferably at least one positioning element (7) for positioning the component part (B2) relative to the component part receptacle (5).

16. The combination according to any one of the preceding claims, comprising a docking member (20-22) and a connector joint (20-22, 24) in which the first component part receptacle (1) is connected to the docking member (20-22) such that it can be moved, preferably rotated, wherein the docking member (20-22) comprises a connector (21) for mechanically connecting to the robot arm (28).

17. The combination according to the preceding claim in combination with claim 4, **characterised in that** at least the region (11-13) of the chucking structure (10) which encompasses the circumferential edge of the component part receptacles (1, 5), preferably the chucking structure (10) as a whole, is connected to the docking member (20-22) such that it cannot be moved with respect to a degree of freedom of movement of the connector joint (20-22, 24).

18. The combination according to any one of the preceding claims, **characterised in that** the joint element (24) to which one of the component part receptacles (1, 5) is connected forms an end of the robot arm (28) which can be freely moved spatially.

19. The combination according to any one of the preceding claims, **characterised in that** the robot arm (28) forms a joint chain which extends from a base (27) of the robot to an end of the robot arm (28) which can be spatially moved relative to the base (27), and **in that** the joint element (20-22) to which the chucking structure (10) is connected is nearer in the joint chain to the base (27) than is the joint element (24) to which one of the component part receptacles (1, 5) is connected.

20. The combination according to any one of the preceding claims, **characterised in that** one of the component part receptacles (1, 5) comprises a hemming bed (4).

21. The combination according to any one of the preceding claims in combination with claim 13, **characterised in that** each of the coupling halves (16; 17) has a docking side (16a; 17a) which contacts the other coupling half in each case in the coupling engagement and points in the tensing direction (X).

22. A joining device for joining component parts (B1, B2), said joining device comprising:
a) a joining tool (30), preferably a hemming means, by means of which the component parts (B1, B2) can be connected to each other along a common circumferential edge in a joining position;
b) a component part receptacle means (1, 5) for accommodating the component parts (B1, B2);
c) and a chucking structure (10) by means of which the accommodated component parts (B1, B2) can be tensed towards each other in a joining position relative to each other,
d) wherein when the component parts (B1, B2) are situated in the joining position, the chucking structure (10) encompasses their common circumferential edge and the component part receptacle means (1, 5),
e) wherein the joining device comprises a combination according to any one of the preceding claims of a chucking device for component parts (B1, B2) to be joined and a robot arm (28) which bears the chucking device, and wherein the chucking device of the combination forms the component part receptacle means (1, 5) and the chucking structure (10).

23. A method for joining component parts, wherein:
a) the component parts (B, B2) are tensed relative to each other in a joining position by means of a combination according to any one of claims 1 to 22 of a chucking device for component parts (B1, B2) to be joined and a robot arm (28) which bears the chucking device
b) and are connected to each other, preferably circumferentially, along a common circumferential edge by means of a joining tool (30; 31).

24. The method according to the preceding claim, wherein when the component parts (B1, B2) are being connected, one of component part receptacles (1,5) which are tensed with respect to each other and the joining tool (30; 31) is spatially moved relative to the other such that the component parts (B1, B2) are connected to each other, along a path defined by the relative movement between the component part receptacles (1, 5) and the joining tool (30; 31), to form the joined composite.

25. The method according to the preceding claim, wherein the other of the component part receptacles (1, 5) and the joining tool (30; 31) is spatially fixed at least when the component parts (B1, B2) are being connected.

26. The method according to any one of the preceding two claims, wherein at least one of the chucking structure (10) and the joining tool (30) is spatially stationary during connecting.

27. The method according to any one of claims 23 to 26, wherein the joining tool (30; 31) comprises at least one hemming roller and the component parts (B1, B2) are connected to each other by roll-hemming.

28. The method according to the preceding claim, wherein an accommodating bed (4) of the first component part receptacle (1) is used as a hemming bed.

29. The method according to any one of claims 23 to 28, wherein the position of at least the region of the chucking structure (10) which encompasses the circumferential edge is adjusted in the longitudinal direction of the circumferential edge relative to the component part receptacles (1, 5).

30. The method according to the preceding claim, wherein the region of the chucking structure (10) which encompasses the circumferential edge and the joining tool (30; 31) are moved relative to the component part receptacles (1, 5) in the same direction along the circumferential edge at least in sections.

## Revendications

1. Combinaison d'un dispositif de serrage pour des composants à assembler (B1, B2) et d'un bras de robot (28) supportant le dispositif de serrage, comportant plusieurs articulations et des éléments d'articulation (20 à 22, 24) formant des paires d'articulations, le dispositif de serrage comportant :
a) un premier support de composant (1) pour un premier composant (B1),
b) un second support de composant (5) pour un second composant (B2),
c) et une structure de serrage (10) qui fixe les supports de composants (1, 5) l'un par rapport à l'autre dans une position d'assemblage,
d) et les supports de composants (1, 5) se trouvant dans la position d'assemblage s'étendent à partir d'un côté extérieur du premier support de composant (1) jusqu'à un côté extérieur du second support de composant (5) opposé au côté extérieur du premier support de composant (1), et entourent chacun un bord périphérique des supports de composants (1, 5),
**caractérisée en ce que**
e) l'un des supports de composants (1, 5) est fixement assemblé avec l'un (24) des éléments d'articulation et la structure de serrage (10) est fixement assemblée avec un autre (20 à 22) des éléments d'articulation du bras de robot (28),
f) et le bras de robot (28) assure la mobilité relative entre la structure de serrage (10) et les supports de composants (1, 5) se trouvant dans la position d'assemblage.

2. Combinaison selon la revendication 1, **caractérisée en ce que** la structure de serrage (10) forme au moins un arceau (11 à 13) qui entoure le bord périphérique.

3. Combinaison selon l'une quelconque des revendications précédentes, **caractérisée en ce que** la structure de serrage (10) forme un cadre (11 à 13), de préférence un cadre au moins sensiblement plan, qui entoure les supports de composants (1, 5) des deux côtés du bord périphérique.

4. Combinaison selon l'une quelconque des revendications précédentes, **caractérisée en ce qu'**au moins une zone (11 à 13) de la structure de serrage (10) entourant le bord périphérique des supports de composants (1, 5) est mobile par rapport au bord périphérique des supports de composants (1, 5) de telle sorte que la position de la zone qui entoure (11 à 13) peut être réglée dans une direction longitudinale du bord périphérique.

5. Combinaison selon l'une quelconque des revendications précédentes, **caractérisée en ce que** les supports de composants (1, 5) doivent ou peuvent être serrés l'un sur l'autre au moyen de la structure de serrage (10) dans une direction de serrage (X), et la zone (11 à 13) de la structure de serrage (10) entourant le bord périphérique est mobile par rapport aux supports de composants (1, 5) transversalement à la direction de serrage (X) , de préférence peut pivoter autour d'un axe de rotation (X) coïncidant avec la direction de serrage (X).

6. Combinaison selon la revendication précédente, **caractérisée en ce que** la structure de serrage (10) est entièrement mobile autour de l'axe de rotation (X) par rapport aux supports de composants, de préférence est mobile en pivotement ou en rotation.

7. Combinaison selon l'une quelconque des revendications précédentes, **caractérisée en ce que** la structure de serrage (10) (14, 24) est assemblée dans une première articulation de manière mobile avec le premier support de composant (1) et est assemblée dans une seconde articulation (5, 15) de manière mobile avec le second support de composant (5).

8. Combinaison selon la revendication précédente, **caractérisée en ce que** la première articulation (14, 24) et la seconde articulation (5, 15) ont un axe d'articulation commun (X).

9. Combinaison selon l'une quelconque des deux revendications précédentes, **caractérisée en ce que** la première articulation (14, 24) et la seconde articulation (5, 15) sont respectivement agencées dans une zone centrale des supports de composants (1, 5).

10. Combinaison selon l'une quelconque des revendications précédentes, **caractérisée en ce que** la structure de serrage (10) inclut une première partie de structure (11) assemblée avec le premier support de composant (1) et une seconde partie de structure (12, 13) assemblée avec le second support de composant (5), et les parties de structure (11 et 12, 13) peuvent être assemblées l'une avec l'autre et peuvent être séparées l'une de l'autre.

11. Combinaison selon la revendication précédente, incluant un accouplement (16, 17) automatiquement actionnable comportant un premier demi-accouplement (16) relié à la première partie de structure (11), et un second demi-accouplement (17) relié à la seconde partie de structure (12, 13).

12. Combinaison selon la revendication précédente, dans laquelle l'accouplement (16, 17) peut être actionné électriquement ou fluidiquement, de préférence pneumatiquement.

13. Combinaison selon l'une quelconque des deux revendications précédentes, **caractérisée en ce que** les supports de composants (1, 5) doivent ou peuvent être serrés l'un sur l'autre au moyen de la structure de serrage (10) dans une direction de serrage (X), et les demi-accouplements (16, 17) sont reliés l'un à l'autre de manière non mobile dans la direction de serrage (X) dans une prise par accouplement, de préférence sont serrés l'un avec l'autre dans la direction de serrage (X).

14. Combinaison selon l'une quelconque des revendications précédentes, **caractérisée en ce qu'**au moins un des supports de composants (1, 5) inclut au moins un élément de préhension (2), de préférence une pince aspirante, pour un support suspendu de l'un des composants (B1, B2).

15. Combinaison selon l'une quelconque des revendications précédentes, **caractérisée en ce qu'**au moins un des supports de composants (1, 5) comporte des appuis (6) pour poser l'un des composants (B1, B2) et de préférence au moins un élément de positionnement (7) pour positionner le composant (B2) par rapport au support de composant (5).

16. Combinaison selon l'une quelconque des revendications précédentes, incluant un organe d'accrochage (20 à 22) et une articulation de raccordement (20 à 22, 24) dans laquelle le premier support de composant (1) est relié à l'organe d'accrochage (20 à 22) de manière mobile, de préférence mobile en rotation, l'organe d'accrochage (20 à 22) comportant un raccord (21) pour un assemblage mécanique avec le bras de robot (28).

17. Combinaison selon la revendication précédente en combinaison avec la revendication 4, **caractérisée en ce qu'**au moins la zone (11 à 13) de la structure de serrage (10), de préférence la structure de serrage (10) dans son ensemble, entourant le bord périphérique des supports de composants (1, 5) est reliée à l'organe d'accrochage (20 à 22) de manière non mobile par rapport à un degré de liberté de mouvement de l'articulation de raccordement (20 à 22, 24).

18. Combinaison selon l'une quelconque des revendications précédentes, **caractérisée en ce que** l'élément d'articulation (24), au moyen duquel l'un des supports de composants (1, 5) est assemblé, forme une extrémité du bras de robot (28) librement mobile dans l'espace.

19. Combinaison selon l'une quelconque des revendications précédentes, **caractérisée en ce que** le bras de robot (28) forme une chaîne à articulations qui s'étend à partir d'une base (27) du robot jusqu'à une extrémité du bras de robot (28) mobile dans l'espace par rapport à la base (27), et **en ce que** l'élément d'articulation (20 à 22), au moyen duquel la structure de serrage (10) est assemblée, dans la chaîne à articulations est plus proche de la base (27) que l'élément d'articulation (24) au moyen duquel l'un des supports de composants (1, 5) est assemblé.

20. Combinaison selon l'une quelconque des revendications précédentes, **caractérisée en ce que** l'un des supports de composants (1, 5) inclut une table de repliage (4).

21. Combinaison selon l'une quelconque des revendications précédentes en combinaison avec la revendication 13, **caractérisée en ce que** chacun des demi-accouplements (16 ; 17) a un côté d'accrochage (16a ; 17a) respectivement en contact avec l'autre demi-accouplement dans la prise par accouplement, lequel côté d'accrochage se situe dans la direction de serrage (X).

22. Dispositif d'assemblage pour assembler des composants (B1, B2), le dispositif d'assemblage comportant :
a) un outil d'assemblage (30), de préférence un dispositif de repliage, au moyen duquel les composants (B1, B2) peuvent être assemblés les uns avec les autres dans une position d'assemblage le long d'un bord périphérique commun,
b) un dispositif de support de composant (1, 5) pour supporter les composants (B1, B2)
c) et une structure de serrage (10) au moyen de laquelle les composants supportés (B1, B2) doivent pouvoir être serrés l'un sur l'autre dans une position d'assemblage,
d) dans lequel la structure de serrage (10) entoure des composants (B1, B2) se trouvant en position d'assemblage dont le bord périphérique est commun, et le dispositif de support de composant (1, 5),
e) dans lequel le dispositif d'assemblage inclut une combinaison d'un dispositif de serrage pour des composants à assembler (B1, B2) et d'un bras de robot (28) supportant le dispositif de serrage selon l'une quelconque des revendications précédentes, et dans lequel le dispositif de serrage de la combinaison forme le dispositif de support de composant (1, 5) et la structure de serrage (10).

23. Procédé pour assembler des composants, dans lequel :
a) les composants (B1, B2) sont serrés l'un par rapport à l'autre au moyen d'une combinaison d'un dispositif de serrage pour des composants à assembler (B1, B2) et d'un bras de robot (28) supportant le dispositif de serrage selon l'une quelconque des revendications 1 à 22 dans une position d'assemblage,
b) et sont assemblés l'un avec l'autre le long d'un bord périphérique commun au moyen d'un outil d'assemblage (30 ; 31), de préférence de manière périphérique.

24. Procédé selon la revendication précédente, dans lequel un élément parmi les supports de composants serrés l'un sur l'autre (1, 5) et l'outil d'assemblage (30 ; 31) est déplacé par rapport à l'autre dans l'espace lors de l'assemblage des composants (B1, B2), de telle sorte que les composants (B1, B2) sont assemblés l'un avec l'autre le long d'un trajet déterminé par le mouvement relatif entre les supports de composants (1, 5) et l'outil d'assemblage (30 ; 31) jusqu'à l'assemblage.

25. Procédé selon la revendication précédente, dans lequel l'autre élément parmi les supports de composants (1, 5) et l'outil d'assemblage (30 ; 31) est fixe au moins lors de l'assemblage des composants (B1, B2).

26. Procédé selon l'une quelconque des deux revendications précédentes, dans lequel au moins un élément parmi la structure de serrage (10) et l'outil d'assemblage (30) reste fixe lors de l'assemblage dans l'espace.

27. Procédé selon l'une quelconque des revendications 23 à 26, dans lequel l'outil d'assemblage (30 ; 31) inclut au moins un rouleau de repliage et les composants (B1, B2) sont assemblés l'un avec l'autre par repliage au rouleau.

28. Procédé selon la revendication précédente, dans lequel une table de support (4) du premier support de composant (1) est utilisée comme table de repliage.

29. Procédé selon l'une quelconque des revendications 23 à 28, dans lequel la position au moins de la zone de la structure de serrage (10) entourant le bord périphérique est réglée par rapport au support de composant (1, 5) dans la direction longitudinale du bord périphérique.

30. Procédé selon la revendication précédente, dans lequel la zone de la structure de serrage (10) entourant le bord périphérique et l'outil d'assemblage (30 ; 31) se déplacent, au moins par parties, dans la même direction par rapport aux supports de composants (1, 5) le long du bord périphérique.
